# EUROPEAN PATENT SPECIFICATION

(11) **EP 2 708 287 B1**
(45) Date of publication and mention of the grant of the patent: **12.08.2015**
(21) Application number: 12006408.4
(22) Date of filing: 12.09.2012
(51) Int. Cl.: B05B 12/00, B05B 12/14, B05B 15/02

(54) **Colour-changer**
Farbwechsler
Changeur de couleur

(43) Date of publication of application: 19.03.2014
(73) Proprietor: ABB Technology AG, 8050 Zürich (CH)
(72) Inventor: Krogedal, Arnulf, 4322 Sandnes (NO)
(74) Representative: Kock, Ina

(56) References cited:
- DE-A1- 19 819 339
- US-A- 3 672 570

## Description

The invention relates to a colour-changer, comprising an output-channel with a belonging outlet for paint material and paint-supply-channels leading thereto which are switchable each by belonging first valve-means, wherein at least the first valve-means are pilotable by a pressured fluid which is conducted through a belonging pressure-line having a belonging inlet each. The invention also relates to a method for determining a leakage of the valve-means of a color-changer according to the invention, wherein the paint-supply-channels are connected to belonging paint-supply-lines.

It is known that in industrial paint shops - for example in the automotive industry- a larger number of paint colours is used. Such paint shops are typically robot-based and designed for a number of for example 20 to 30 paint colours and a cycle time of for example 60s to 90s per object to become painted. Normally a colour-changer might be mounted on the arm of a belonging robot and is foreseen for a change of the current paint color. A colour changer is a switchable connection inbetween one paint output - which is the end of an output channel of a colour-changer - and a larger number of different paint-supply-lines which are provided along the different paint booth and which are leading to the output channels of belonging colour-changers. The output of a colour-changer is normally connected with an atomizer which is mounted at the end of the robot arm in case of a robot based paint shop. But of course also other manipulators than robots are suitable to move an atomizer around an object to be painted.

Inbetween the paint-supply-lines and the output-channel of a belonging colour-changer valve-means are foreseen which strictly have to become switched alternating so that at maximum a channel from one paint-supply-line to the output-channel is open. In case of more than exact one open channel leading to the output-channel a mixture of different paint materials with different colours will occur and the paint result on the painted object will be unusable. Even control mechanism might be foreseen to prevent a synchronous switching of the valve-means it can never become totally excluded that more than one paint-supply-channel is connected to the output-channel in case of a malfunction of the control-mechanism.

Also in case of the leakage of one of the valve-means a mixture of different paint materials will occur and the paint result will be unusable. A leakage of a valve-means is rather difficult to detect, in most cases only indirectly by detection of an already unusable paint-result. Moreover, a correlation of an unusable paint result to a certain atomizer - in case that an object is painted by different robots respectively atomizers - is not always possible. Thus a larger time is required to search for the belonging defect colour-changer.

In the document US 3 672 570 A a pneumatically controlled color change system for use with automatic multi-color paint spray apparatus is revealed. An entirely pneumatically controlled system employing a pneumatic timer including pneumatic sequence valves controls a quick-color change system in which a plurality of colors of paint are connected to various inputs of a manifold, each through a check valve which isolates each of the manifold ports from each other and in which a source of solvent is connected to another input of the manifold.

The document DE 198 19 339 A1 reveals a method and a device for checking the tightness of the valves of color changers for seriell processing of different lacquers. The tightness of the associated valves is checked by inserting air under under high test pressure in the color changer.

Based on this state of the art it is the objective of the invention to provide a colour-changer which is on the one side safe against any un-intended synchronous switching of the valve-means and which allows on the other side an easy detection of any leakage of the valve-means.

This problem is solved by a colour-changer of the aforementioned kind. This is characterized in that exact one switchable pressure-supply-outlet is foreseen which alternatively is connectable with one of the inlets of the pressure-lines, so that at most one of the belonging valve-means is switchable at the same time.

The basic idea of the invention consists in the mechanically exclusion of synchronous switching more than one valve-means within the group of valve-means for the paint-supply-lines. By having only one pressure-supply-outlet which can alternately be connected with one of the inlets of the pressure-lines not more than one valve-means can be actuated respectively piloted at the same time. The valve-means are designed in that way that they are normally in the closed state, for example by use of a pressure force of a spring or such. In case of a pressure within the belonging and connected pressure-line - which preferably might be filled with air as pressured fluid - a force in the opposite direction than the pressure force of the spring is applied and the valve-means opens.

The connection of the pressure-supply-output and the belonging inlet of the selected pressure-line comprises on the one side a movement of the pressure-supply-output in that way that the pressure-supply-output is face to face with the inlet of the selected pressure-line. Preferably means are foreseen to perform an additional docking movement in axial direction so that after such a docking movement a sealed connection inbetween pressure-supply-output and pressure-line is gained. Optionally some seal rings might be foreseen.

The pressure-supply-output itself is switchable so that it can be turned on and off on demand. Normally a pressured-air-supply is available in paint booth so that this can be used as source for the pressure-supply-output.

The colour-changer as such might be built from a block of metal for example wherein the output-channel might be a bore-hole of for example 6mm diameter where further bore holes for the paint-supply-lines are leading to. Of course also a modular structure of such a block is possible.

Thus a safe colour changer is provided which physically excludes synchronous switching of more than one valve-means.

According to a further embodiment of the invention at least a group of inlets of the pressure-lines are arranged along a circular path and the pressure-supply-outlet is pivotable along a corresponding circular path, so that a selection of the belonging inlet of a pressure-line to be connected with the pressure-supply-outlet is realizable by performing a belonging rotary movement of the pressure-supply-outlet. A circular arrangement provides as well a compact and lightweight design of the colour changer as short movement distances for a fast selection of the input of the pressure-lines. A rotary movement requires one degree of freedom in movement so that one drive is sufficient to effect the belonging movement of the pressure-supply-outlet. A drive could be powered by pressured air for example. Pressured air is also suitable to pivot the valve-means. A flexible connection hose used as pressure-line is suitable to compensate any movement inbetween a fixed pressure-supply and the movable pressure-supply-outlet.

According to another embodiment of the invention at least a group of inlets of the pressure-lines are arranged along a linear path and the pressure-supply-outlet is moveable along a corresponding linear path, so that a selection of the belonging inlet of a pressure-line to be connected with the pressure-supply-outlet is realizable by a belonging linear movement of the pressure-supply-outlet. Also for a linear movement only one drive is required in an advantageous way. Of course variants with more than one degree of freedom in movement of the pressure-supply-outlet are possible, for example a kind of x-y matrix with two degrees of freedom in movement. This is also a very compact arrangement.

According to a further embodiment of the invention a second valve-means is foreseen at the outlet of the output-channel. Thus it is possible to hermetically close all ducts to and from the output-channel. This enables for example an easy color change within the output-channel whereas the connection to the atomizer is closed. Thus no mixed color which is produced during a color change can flow to the atomizer connected to the output of the output-channel.

According to another embodiment of the invention a solvent-supply-channel is leading to the output-channel which is switchable by belonging third valve-means. This enables an easy color-change within the outlet-channel. After closing the valve-means of the proceeding paint material and before opening the valve-means of the subsequent paint material the output-channel is cleaned by a solvent flowing through it. The solvent flows off from the output-channel either through an open output of the outlet of the output-channel or a certain dump line which preferably is also switchable connected with the output-channel.

According to a further embodiment of the invention a pressure-sensor is foreseen for determining the pressure within the output-channel. Such a pressure sensor enables the determination of a possible pressure-drift within the output-channel and can be used as indicator for a possible leakage of one of the valve-means. All channels leading to the output-channel have to be closed for determining such a drift.

Following steps are foreseen within a method for determining a leakage of the valve-means of a color-changer according to the invention, wherein the paint-supply-channels are connected to belonging paint-supply-lines operated with at most a first pressure, wherein the solvent-supply-channel is connected to a belonging solvent-supply-line operated with at least a second pressure, wherein the second pressure is higher than the first pressure:
- closing all first and the second valve-means,
- opening the third valve means so that the pressure within the output-channel corresponds to the pressure of the solvent-supply-line,
- closing the third valve means, so that the output-channel is completely closed,
- observing the pressure within the output-channel by means of the pressure sensor,
- generating a warning signal in case of a drift of the measured pressure.

Hence a pressure of the solvent is applied within the output-channel, which is higher than the pressure of the paint-supply-line. Than all valve means are closed, so that the output-channel is hermetically sealed. In case of the leakage of any of the valve means the pressure within the output-channel is not constant but there will be a decreasing drift. This drift is an indicator that any of the valve-means is leaking.

According to another embodiment of the invention a plunger is foreseen for applying a certain pressure-force into the filled and closed output-channel wherein the position of the plunger is determinable. Such a plunger can be used as indicator for a possible leakage of one of the valve-means.

Following steps are foreseen within a belonging method for determining a leakage of the valve-means of a color-changer according to the invention, wherein the paint-supply-channels are connected to belonging paint-supply-lines:
- closing at least all first and the second valve-means so that the output-channel is completely closed,
- applying a constant pressure force into the filled output-channel by means of the plunger,
- observing the position of the plunger and generating a warning signal in case of a drift of the position of the plunger.

Comparable to the method mentioned before, a pressure is applied within the closed output-channel, which is different than the pressure of the paint-supply-line. In case of the leakage of any of the valve means the pressure within the output-channel will still be constant due to the constant pressure force of the plunger, but the plunger will move in case of any leakage. Such a movement is an indicator that any of the valve-means is leaking.

For both methods evaluation units might be required such as a computing device which observes a possible pressure drift respectively movement of the plunger and which generates a warning signal for example in case of a detected leakage.

Further advantageous embodiments of the invention are mentioned in the dependent claims.

The invention will now be further explained by means of an exemplary embodiment and with reference to the accompanying drawing, in which:

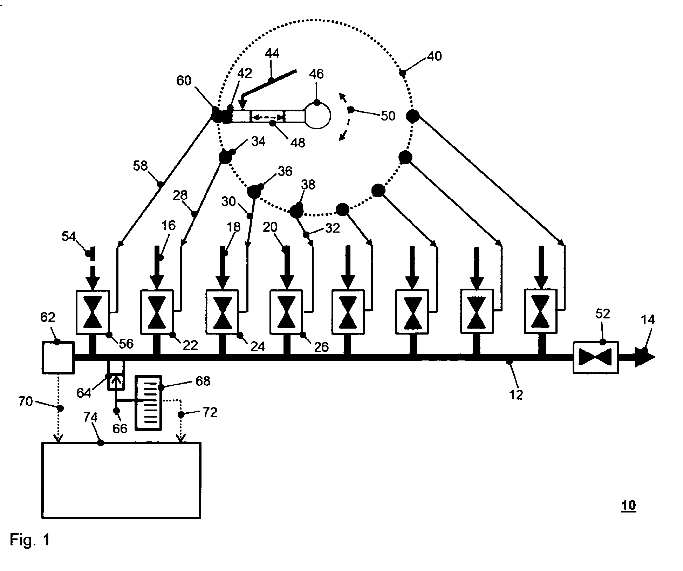

Figure 1 shows an exemplary colour-changer.

Fig. 1 shows an exemplary colour-changer 10 in a schematic view. Several paint-supply-channels 16, 18, 20 are leading to an output-channel 12. Each of the paint-supply-channels 16, 18, 20 is switchable by a belonging valve-means 22, 24, 26 which are closed in their normal state and which are pilotable by applying a pressure force, for example an air pressure force, over the belonging pressure lines 28, 30, 32.

In the case that one of the valve-means 22, 24, 26 is piloted and open, paint material from a not shown paint-supply-system flows into the output-channel 12 and from there through a second valve-means 52 through the output 14 to a not shown paint atomiser. The second valve-means 52 enables the closing of the output 14 so that no paint can flow to the atomiser in the closed state of the second valve-means 52 as it might be required for example during a colour-change or a cleaning-process. Such a cleaning process should be done before a new colour is filled into the output-channel 12 to prevent any colour mismatch of the object to be painted.

In this example at the rear side of the output-channel 12 a solvent-supply-channel 54 is foreseen which is switchable by a third valve-means 56. In case of a colour-change at least all first 22, 24, 26 valve-means are closed and afterwards solvent is flowing from the solvent-supply-channel 54 into the output-channel 12 and from there through the output 14. After cleaning the output-channel 12 a first valve-means 22, 24, 26 can be opened so that a new paint colour is flowing into the output-channel 12.

The pressure-lines 28, 30, 32 are alternatively connectable with a pressure-supply 44, for example a supply of pressured air. Inlets 34, 36, 38 of the pressure-lines 28, 30, 32 are arranged along a circular path 40. By pivoting a docking element 46 in a circular direction as indicated with the arrow 50 a switchable pressure-supply-outlet 42 can be positioned face to face to exact one of the inlets 34, 36, 38. An additional docking movement in axial direction, in this example performable by a docking cylinder 48, enables a safe connection of the pressure-supply-outlet 42 with at most one of the inlets 34, 36, 38. Thus it is excluded that more than one first valve-means 22, 24, 26 is piloted at the same time.

The solvent-supply-channel 54 and its belonging third valve-means 56 is constructed comparable to the paint-supply-channels 16, 18, 20 respectively the first valve-means 22, 24, 26. The third valve-means 56 is piloted by a separate pressure-line 58 which is connectable over its inlet 60 with the switchable pressure supply outlet 42. Thus it is excluded, that the third valve-means 56 and any of the first valve-means 22, 24, 26 can be opened at the same time.

At the rear side of the output-channel 12 a pressure-sensor 14 is foreseen. In case of applying a certain pressure within the output-channel 12 and closing all valve means 22, 24, 26, 52, 54 leading thereto, the pressure within the output-channel should be constant theoretically. A drift of the pressure is an indicator for a leakage of any of the valve-means 22, 24, 26, 52, 54.

Also at the rear side of the output-channel - preferably as alternative solution to the pressure-sensor 62 - a plunger 64 is foreseen, which applies a certain pressure-force 66 into the filled and closed output-channel 12. The pressure within the output-channel 12 will be constant due to the applied constant pressure force. Anyhow in case of a movement of the plunger 64 a leakage of one of the valve-means 22, 24, 26, 52, 54 can be assumed. A movement is detectable with determination means 68, which might be optical based for example.

An evaluation unit 74 is connected 70, 72 with the pressure-sensor 62 and/or the plunger 64 and observes a pressure drift and/or a movement of the plunger 64. Since the observation also requires the actual states of the valve-means 22, 24, 26, 52, 54 a connection to an overall control system or - in case of a robot based paint shop - a robot controller might be foreseen.

### List of reference signs

- 10: exemplary colour-changer
- 12: output-channel
- 14: output for paint material
- 16: first paint-supply-channel
- 18: second paint-supply-channel
- 20: third paint-supply-channel
- 22: first first valve-means
- 24: second first valve-means
- 26: third first valve-means
- 28: first pressure-line
- 30: second pressure-line
- 32: third pressure-line
- 34: inlet of first pressure-line
- 36: inlet of second pressure-line
- 38: inlet of third pressure-line
- 40: circular path
- 42: switchable pressure-supply-outlet
- 44: pressure-supply
- 46: pivotable docking element
- 48: docking cylinder
- 50: pivoting direction
- 52: second valve-means
- 54: solvent-supply-channel
- 56: third valve-means
- 58: fourth pressure-line
- 60: inlet of fourth pressure-line
- 62: pressure-sensor
- 64: plunger
- 66: pressure-force
- 68: determination means
- 70: first data line
- 72: second data line
- 74: evaluation unit

## Claims

1. Colour-changer (10), comprising
• an output-channel (12) with a belonging outlet (14) for paint material,
• paint-supply-channels (16, 18, 20) leading thereto (12) which are switchable each by belonging first valve-means (22, 24, 26),
wherein at least the first valve-means (22, 24, 26) are pilotable by a pressured fluid which is conducted through a belonging pressure-line (28, 30, 32) having a belonging inlet (34, 36, 38) each, wherein exact one switchable pressure-supply-outlet (42) is foreseen which alternatively is connectable with one of the inlets (34, 36, 38) of the pressure-lines (28, 30, 32), so that at most one of the belonging valve-means (22, 24, 26) is switchable at the same time and wherein a second valve-mean (52) is foreseen at the outlet (14) of the output-channel (52),
**characterized in that**
a plunger (64) is foreseen for applying a certain pressure-force (66) into the filled output-channel (12) and **in that** the position of the plunger (64) is determinable (68).

2. Colour-changer according to claim 1, **characterized in that** at least a group of inlets (34, 36, 38) of the pressure-lines (28, 30, 32) are arranged along a circular path (40) and that the pressure-supply-outlet (42) is pivotable (50) along a corresponding circular path, so that a selection of the belonging inlet (34, 36, 38) of a pressure-line (28, 30, 32) to be connected with the pressure-supply-outlet (42) is realizable by a belonging rotary movement of the pressure-supply-outlet (42).

3. Colour-changer according to claim 1, **characterized in that** at least a group of inlets (34, 36, 38) of the pressure-lines (28, 30, 32) are arranged along a linear path and that the pressure-supply-outlet (42) is moveable along a corresponding linear path, so that a selection of the belonging inlet (34, 36, 38) of a pressure-line (28, 30, 32) to be connected with the pressure-supply-outlet (42) is realizable by a belonging linear movement of the pressure-supply-outlet (42).

4. Colour-changer according to any of the proceeding claims, **characterized in that** a solvent-supply-channel (54) is leading to the output-channel (12) and that it is switchable by belonging third valve-means (56).

5. Colour-changer according to any of the proceeding claims, **characterized in that** a pressure-sensor (62) is foreseen for determining the pressure within the output-channel (12).

6. Method for determining a leakage of the valve-means (22, 24, 26, 52, 56) of a color-changer according to any of the claims 1 to 5, wherein the paint-supply-channels (16, 18, 20) are connected to belonging paint-supply-lines operated with at most a first pressure, wherein the solvent-supply-channel (54) is connected to a belonging solvent-supply-line operated with at least a second pressure, wherein the second pressure is higher than the first pressure,
**characterized by** the following steps:
• closing all first (22, 24, 26) and the second (52) valve-means,
• opening the third valve means (54) so that the pressure within the output-channel (12) corresponds to the pressure of the solvent-supply-line (54),
• closing the third valve means (54), so that the output-channel (12) is completely closed,
• observing the pressure within the output-channel (12) by means of the pressure sensor (62),
• generating a warning signal in case of a drift of the measured pressure.

7. Method for determining a leakage of the valve-means (22, 24, 26, 52, 56) of a color-changer according to claim 5, wherein the paint-supply-channels (16, 18, 20) are connected to belonging paint-supply-lines,
**characterized by** the following steps:
• closing at least all first (16, 18, 20) and the second (52) valve-means so that the output-channel (12) is completely closed,
• applying a constant pressure force (66) into the filled output-channel by means of the plunger (64),
• observing the position of the plunger (64) and generating a warning signal in case of a drift of the position of the plunger (64).

## Patentansprüche

1. Farbwechsler (10), der aufweist:
- einen Ausgangskanal (12) mit einem zugehörigen Ausgang (14) für Farbmaterial,
- zu diesem (12) hinführende Farbzufuhrkanäle (16, 18, 20), die jeweils durch zugehörige erste Ventilmittel (22, 24, 26) schaltbar sind,
wobei mindestens die ersten Ventilmittel (22, 24, 26) durch ein Druckfluid steuerbar sind, welches durch eine zugehörige Druckleitung (28, 30, 32) geleitet wird, die jeweils einen zugehörigen Eingang (34, 36, 38) aufweist, wobei genau ein schaltbarer Druckzufuhrausgang (42) vorgesehen ist, der alternativ mit einem der Einlässe (34, 36, 38) der Druckleitungen (28, 30, 32) verbindbar ist, derart, dass höchstens eines der zugehörigen Ventilmittel (22, 24, 26) gleichzeitig schaltbar ist, und wobei ein zweites Ventilmittel (52) an dem Auslass (14) des Ausgangskanals (12) vorgesehen ist,
**dadurch gekennzeichnet, dass**
ein Kolben (64) zum Aufbringen einer bestimmten Druckkraft (66) in den gefüllten Ausgangskanal (12) vorgesehen ist und dass die Position des Kolbens (64) bestimmbar (68) ist.

2. Farbwechsler nach Anspruch 1, **dadurch gekennzeichnet, dass** mindestens eine Gruppe von Einlässen (34, 36, 38) der Druckleitungen (28, 30, 32) entlang einem kreisförmigen Pfad (40) angeordnet ist und dass der Druckzufuhrauslass (42) entlang einem entsprechenden kreisförmigen Pfad schwenkbar (50) ist, derart, dass eine Auswahl des zugehörigen Einlasses (34, 36, 38) einer Druckleitung (28, 30, 32), der mit dem Druckzufuhrauslass (42) verbunden werden soll, durch eine zugehörige Drehbewegung des Druckzufuhrauslasses (42) durchführbar ist.

3. Farbwechsler nach Anspruch 1, **dadurch gekennzeichnet, dass** mindestens eine Gruppe von Einlässen (34, 36, 38) der Druckleitungen (28, 30, 32) entlang einem linearen Pfad angeordnet ist und dass der Druckzufuhrauslass (42) entlang einem entsprechenden linearen Pfad bewegbar ist, derart, dass eine Auswahl des zugehörigen Einlasses (34, 36, 38) einer Druckleitung (28, 30, 32), der mit dem Druckzufuhrauslass (42) verbunden werden soll, durch eine zugehörige lineare Bewegung des Druckzufuhrauslasses (42) durchführbar ist.

4. Farbwechsler nach einem beliebigen der vorhergehenden Ansprüche, **dadurch gekennzeichnet, dass** ein Lösemittelzufuhrkanal (54) zu dem Ausgangskanal (12) führt und dass er durch ein zugehöriges drittes Ventilmittel (56) schaltbar ist.

5. Farbwechsler nach einem beliebigen der vorhergehenden Ansprüche, **dadurch gekennzeichnet, dass** ein Drucksensor (62) zum Bestimmen des Drucks innerhalb des Ausgangskanals (12) vorgesehen ist.

6. Verfahren zum Bestimmen einer Undichtheit der Ventilmittel (22, 24, 26, 52, 56) eines Farbwechslers nach einem beliebigen der Ansprüche 1 bis 5, wobei die Farbzufuhrkanäle (16, 18, 20) mit zugehörigen Farbzufuhrleitungen verbunden sind, die mit höchstens einem ersten Druck betrieben werden, wobei der Lösemittelzufuhrkanal (54) mit einer zugehörigen Lösemittelzufuhrleitung verbunden ist, die mit mindestens einem zweiten Druck betrieben wird, wobei der zweite Druck höher als der erste Druck ist,
**gekennzeichnet durch** folgende Schritte:
- Schließen aller ersten Ventilmittel (22, 24, 26) und des zweiten Ventilmittels (52),
- Öffnen des dritten Ventilmittels (56), derart, dass der Druck innerhalb des Ausgangskanals (12) dem Druck der Lösemittelzufuhrleitung (54) entspricht,
- Schließen des dritten Ventilmittels (56), derart, dass der Ausgangskanal (12) vollständig geschlossen ist,
- Überwachen des Drucks innerhalb des Ausgangskanals (12) mittels des Drucksensors (62),
- Erzeugen eines Warnsignals bei einer Drift des gemessenen Drucks.

7. Verfahren zum Bestimmen einer Undichtheit der Ventilmittel (22, 24, 26, 52, 56) eines Farbwechslers nach Anspruch 5, wobei die Farbzufuhrkanäle (16, 18, 20) mit zugehörigen Farbzufuhrleitungen verbunden sind,
**gekennzeichnet durch** die folgenden Schritte:
- Schließen mindestens aller ersten Ventilmittel (22, 24, 26) und des zweiten Ventilmittels (52), derart, dass der Ausgangskanal (12) vollständig geschlossen ist,
- Aufbringen einer konstanten Druckkraft (66) in den gefüllten Ausgangskanal mittels des Kolbens (64),
- Überwachen der Position des Kolbens (64) und Erzeugen eines Warnsignals bei einer Drift der Position des Kolbens (64).

## Revendications

1. Changeur (10) de couleur, comportant un conduit (12) de sortie auquel est rattachée une sortie (14) destinée à un matériau de peinture,
des conduits (16, 18, 20) d'alimentation en peinture menant à celui-ci (12), qui peuvent être permutés par des premiers moyens (22, 24, 26) de vannes rattachés à chacun d'eux,
au moins les premiers moyens (22, 24, 26) de vannes pouvant être pilotés par un fluide sous pression qui est acheminé à travers une canalisation (28, 30, 32) de pression rattachée à laquelle est rattachée une entrée (34, 36, 38) pour chacun, exactement une sortie commutable (42) d'arrivée de pression étant prévue, qui peut être reliée alternativement à une des entrées (34, 36, 38) des canalisations (28, 30, 32) de pression, de sorte qu'au plus un des moyens (22, 24, 26) de vannes rattachés est commutable en même temps et un deuxième moyen (52) de vanne étant prévu à la sortie (14) du conduit (12) de sortie,
**caractérisé**
**en ce qu'**un piston (64) est prévu pour appliquer une certaine force (66) de pression dans le conduit (12) de sortie rempli et en ce que la position du piston (64) peut être déterminée (68).

2. Changeur de couleur selon la revendication 1, **caractérisé en ce qu'**au moins un groupe d'entrées (34, 36, 38) des canalisations (28, 30, 32) de pression est disposé le long d'un parcours circulaire (40) et **en ce que** la sortie (42) d'arrivée de pression peut pivoter (50) le long d'un parcours circulaire correspondant, de sorte qu'une sélection de l'entrée (34, 36, 38) rattachée à une canalisation (28, 30, 32) de pression à raccorder avec la sortie (42) d'arrivée de pression est réalisable par un mouvement tournant associé de la sortie (42) d'arrivée de pression.

3. Changeur de couleur selon la revendication 1, **caractérisé en ce qu'**au moins un groupe d'entrées (34, 36, 38) des canalisations (28, 30, 32) de pression est disposé le long d'un parcours linéaire et **en ce que** la sortie (42) d'arrivée de pression peut être déplacée le long d'un parcours linéaire correspondant, de sorte qu'une sélection de l'entrée (34, 36, 38) rattachée à une canalisation (28, 30, 32) de pression à raccorder avec la sortie (42) d'arrivée de pression est réalisable par un mouvement linéaire associé de la sortie (42) d'arrivée de pression.

4. Changeur de couleur selon l'une quelconque des revendications précédentes, **caractérisé en ce qu'**un conduit (54) d'alimentation en solvant mène au conduit (12) de sortie et **en ce qu'**il est commutable par un troisième moyen (56) de vanne rattaché.

5. Changeur de couleur selon l'une quelconque des revendications précédentes, **caractérisé en ce qu'**un capteur (62) de pression est prévu pour déterminer la pression à l'intérieur du conduit (12) de sortie.

6. Procédé de détermination d'une fuite des moyens (22, 24, 26, 52, 56) de vannes d'un changeur de couleur selon l'une quelconque des revendications 1 à 5, les conduits (16, 18, 20) d'alimentation en peinture étant raccordés à des canalisations rattachées d'alimentation en peinture exploitées avec au plus une première pression, le conduit (54) d'alimentation en solvant étant raccordé à une canalisation rattachée d'alimentation en solvant exploitée avec au moins une deuxième pression, la deuxième pression étant supérieure à la première pression,
**caractérisé par** les étapes suivantes :
fermer tous les premiers (22, 24, 26) et le deuxième (52) moyens de vanne,
ouvrir le troisième moyen (56) de vanne de telle sorte que la pression à l'intérieur du conduit (12) de sortie corresponde à la pression de la canalisation (54) d'alimentation en solvant,
fermer le troisième moyen (56) de vanne, de telle sorte que le conduit (12) de sortie soit entièrement fermé,
observer la pression à l'intérieur du conduit (12) de sortie au moyen du capteur (62) de pression,
générer un signal d'avertissement en cas de dérive de la pression mesurée.

7. Procédé de détermination d'une fuite des moyens (22, 24, 26, 52, 56) de vannes d'un changeur de couleur selon la revendication 5, les conduits (16, 18, 20) d'alimentation en peinture étant raccordés à des canalisations rattachées d'alimentation en peinture, **caractérisé par** les étapes suivantes :
fermer au moins tous les premiers (22, 24, 26) et le deuxième (52) moyens de vanne de telle sorte que le conduit (12) de sortie soit entièrement fermé,
appliquer une force (66) de pression constante dans le conduit de sortie rempli au moyen du piston (64),
observer la position du piston (64) et générer un signal d'avertissement en cas de dérive de la position du piston (64).
